# EUROPÄISCHE PATENTSCHRIFT

(11) **EP 2 314 130 B1**
(45) Veröffentlichungstag und Bekanntmachung des Hinweises auf die Patenterteilung: **21.12.2011**
(21) Anmeldenummer: 09775859.3
(22) Anmeldetag: 15.04.2009
(51) Int. Cl.: H05B 3/48, H05B 3/28, B29C 45/27, B29C 45/74

(54) **ELEKTRISCHES HEIZELEMENT FÜR TECHNISCHE ZWECKE**
ELECTRIC HEATING ELEMENT FOR TECHNICAL PURPOSES
ÉLÉMENT CHAUFFANT ÉLECTRIQUE À DES FINS TECHNIQUES

(30) Priorität: 27.09.2008 DE 102008049215
(43) Veröffentlichungstag der Anmeldung: 27.04.2011
(73) Patentinhaber: Hotset Heizpatronen u. Zubehör GmbH, 58511 Lüdenscheid (DE)
(72) Erfinder: KOLLENBERG, Wolfgang, 50321 Brühl (DE)
(74) Vertreter: Köchling, Conrad-Joachim
(86) Internationale Anmeldenummer: PCT/DE2009/000520
(87) Internationale Veröffentlichungsnummer: WO 2010/034271

(56) Entgegenhaltungen:
- WO-A-01/98054
- WO-A-97/14157
- DE-A1- 10 100 125
- US-A- 4 035 613
- US-A- 5 973 296
- US-A1- 2002 105 080
- US-A1- 2003 149 505
- US-A1- 2005 257 367
- US-A1- 2007 110 893

## Beschreibung

Die Erfindung betrifft ein elektrisches Heizelement für technische Zwecke, insbesondere zur Beheizung von Heißkanalsystemen, Heißkanalverteilern, Heißkanaldüsen, Werkzeugen von Spritzgießmaschinen, wobei auf eine Fläche des Heizelementes oder eines Heizelementträgers eine dielektrische Schicht aufgebracht ist, auf die ein elektrisches Widerstandselement aufgebracht ist, das elektrische Anschlusskontakte zum Kontakt mit einer elektrischen Stromquelle aufweist, wobei das Widerstandselement von einer Schutzschicht, insbesondere einer dielektrischen Schicht abgedeckt ist.

Aus der DE 10 2006 061 435 A1 ist es bekannt, eine Leiterbahn im Wege des Flammspritzens auf ein Substrat aufzubringen.

Auch die DE 103 20 379 A1 beschreibt die Herstellung eines elektrischen Heizelementes im Wege des Flammspritzens.

Eine ähnliche Verfahrensweise beschreibt die DE 44 06 940 A1.

Auch die US 6 861 101 B1 beschreibt eine derartige Verfahrensweise.

Ähnlich beschreibt die WO 97/13884 ein Verfahren zum Plasmaspritzen von elektrischen Heizleitern.
Ähnliche Verfahrensweisen sind in der DE 101 60 451 A1, der WO 02/068245 A1, der EP 1 672 958 A2 und der WO 03/052776 A2 beschrieben.

Die dort beschriebenen Verfahrensweisen sind sehr aufwendig und mit hohem Energieeinsatz verbunden.

Die EP 1 234 651 A2 beschreibt den Auftrag eines Heizleiters mittels einer Dünnfilmtechnik, wobei der Heizleiter als Dünnfilm in Form einer leitfähigen Farbe aufgebracht wird.

Die DE 199 41 038 A1 beschreibt ein Verfahren zur Herstellung einer elektrischen Heizung, wobei die leitfähige Schicht mittels Folien-, Dickschicht- oder Siebdrucktechnik aufgebracht wird. Auch die dort beschriebene Verfahrensweise ist aufwendig und für kostengünstige Großserienfertigung nicht geeignet.

Das Gebrauchsmuster G 89 09 020.9 U1 beschreibt schließlich ein Flächenheizelement, wobei die leitende Schicht über Siebdruck von Pasten aufgebracht wird und bei hohen Temperaturen eingebrannt wird. Die Heizleiterbahnen werden hierbei in Dickschicht-Pasten-Technik aufgebracht.

Aus der WO01/98054 A ist ein elektrisches Heizelement gemäß Oberbegriff des Anspruches 1 bekannt.

Aus der US 2002/105080 A1 ist ein elektrisches Heizelement bekannt, bei dem das Widerstandselement mit mittels eines funktionellen Druckvorganges aufgetragen ist. Hierbei wird eine Emulsion oder Dispersion aus elektrisch leitenden Partikeln und einem Träger- oder Bindematerial tröpfchenweise auf die dielektrische Schicht aufgetragen, um das elektrische Widerstandselement zu bilden.

Ausgehend von diesem Stand der Technik liegt der Erfindung die Aufgabe zugrunde, ein elektrisches Heizelement zu schaffen, welches besonders einfach, kostengünstig und schnell gefertigt werden kann, um hohe Stückzahlen zu konkurrenzfähigen Preisen anbieten zu können.

Zur Lösung dieser Aufgabe schlägt die Erfindung vor, dass das Widerstandselement mittels eines funktionellen Druckvorganges aufgetragen ist, wobei eine Emulsion oder Dispersion aus elektrisch leitenden Partikeln und einem Träger- oder Bindermaterial tröpfchenweise auf die dielektrische Schicht aufgetragen ist, um das elektrisches Widerstandselement zu bilden, und dass die elektrisch leitenden Partikel aus einem metallischen Pulver bestehen, und dass die in Form des Widerstandselementes aufgebrachte Emulsion oder Dispersion nach dem Auftrag getrocknet und gesintert ist, so dass die elektrisch leitenden Partikel zu einem durchgehenden elektrischen Widerstandselement miteinander verbunden und/oder verschmolzen sind.

Gemäß der Erfindung werden elektrisch leitende Partikel in Form einer Dispersion, beispielsweise mittels eines Druckkopfes, vergleichbar einem Tintenstrahldrucker, punktuell aufgetragen, um so das elektrische Widerstandselement zu bilden. Durch entsprechende Materialauswahl und entsprechende Schichtdicke können unterschiedliche Leistungen für das elektrische Widerstandselement zur Verfügung gestellt werden. Das Auftragen von entsprechenden Dispersionen mittels eines funktionellen Druckvorganges ist äußerst einfach und sehr schnell und damit kostengünstig durchzuführen, wobei eine großtechnische Anwendung zur Herstellung großer Stückzahlen in einfacher Weise zu realisieren ist.

Durch die Trocknung und den Sinterungsvorgang werden die einzelnen elektrisch leitenden Partikel zu einem durchgehenden elektrischen Widerstandselement miteinander verbunden beziehungsweise verschmolzen, so dass ein entsprechender Widerstand als Heizelement zur Verfügung steht.

Bevorzugt ist dabei vorgesehen, dass die durch den Auftrag der Emulsion oder Dispersion erzeugte Schicht, insbesondere die daraus gebildete Schicht von elektrisch leitenden Partikeln, eine für eine elektrische Widerstandsheizung ausreichende Schichtdicke aufweist.

Des Weiteren ist bevorzugt vorgesehen, dass die elektrisch leitenden Partikel aus Kupfer oder einer Kupferlegierung bestehen.

Beispielsweise kann das metallische Pulver in Form einer Dispersion zur Verfügung gestellt werden, um das entsprechende Heizelement erfindungsgemäß auszubilden.

Bevorzugt ist dabei vorgesehen, dass die Dispersion oder Emulsion mittels einer Vorrichtung aufgebracht ist, die einen Druckkopf nach Art eines Tintenstrahldruckers aufweist und mittels derer die Dispersion oder Emulsion tröpfchenweise aufgebracht ist. Zudem kann bevorzugt vorgesehen sein, dass die dielektrische Schicht aus keramischem Material, insbesondere Aluminiumoxid besteht.

Auch kann vorgesehen sein, dass die Schutzschicht aus keramischem Material, insbesondere Aluminiumoxid, besteht.

Eine Besonderheit wird darin gesehen, dass die gesamte Oberfläche des Heizelementes oder des Heizelementträgers mit einer dielektrischen Schicht aus keramischem Material beschichtet ist, zum Beispiel im Wege einer Tauchbeschichtung oder im Wege eines Flammspritzverfahrens.

Hiermit kann die gesamte Oberfläche des Heizelementes in einfacher Weise mit einer dielektrischen Schicht beschichtet werden. Eine selektive Beschichtung von einzelnen Flächen ist dabei nicht erforderlich.

Bevorzugt ist zudem vorgesehen, dass die Schutzschicht durch Dip-Coating und nachfolgendes Tempern aufgebracht und fixiert ist.

Bei dieser Ausbildung erfolgt eine partielle Beschichtung des elektrischen Heizelementes lediglich im Bereich des Widerstandsleiters mit der Schutzschicht, die durch beispielsweise Dip-Coating aufgebracht wird und nachfolgend durch Tempern fixiert wird.

In an sich bekannter Weise ist vorgesehen, dass das Heizelement oder der Heizelementträger aus Metall besteht.

Ebenfalls ist in an sich bekannter Weise vorgesehen, dass das Heizelement oder der Heizelementträger ein rohrförmiger Heizkörper oder eine zylindrische Heizpatrone oder -hülse ist.

Bevorzugt ist zudem vorgesehen, dass die Emulsion oder Dispersion durch einen funktionalen Druckvorgang nach Art eines Drop on Demand Verfahrens aufgebracht ist.

Die Erfindung stellt eine einfache Möglichkeit zur Verfügung, mittels derer ein elektrisches Heizelement mit beliebig geformten elektrischen Widerstandselementen versehen werden kann, die auch bei schwierigen Formen oder Strukturen in einfacher Weise realisiert werden können, so dass eine großtechnische kostengünstige Fertigung ermöglicht ist.

## Patentansprüche

1. Elektrisches Heizelement für technische Zwecke, insbesondere zur Beheizung von Heißkanalsystemen, Heißkanalverteilern, Heißkanaldüsen, Werkzeugen von Spritzgießmaschinen, wobei auf eine Fläche des Heizelementes oder eines Heizelementträgers eine dielektrische Schicht aufgebracht ist, auf die ein elektrisches Widerstandselement aufgebracht ist, das elektrische Anschlusskontakte zum Kontakt mit einer elektrischen Stromquelle aufweist, wobei das Widerstandselement von einer Schutzschicht, insbesondere einer dielektrischen Schicht abgedeckt ist,
**dadurch gekennzeichnet, dass** das Widerstandselement mittels eines funktionellen Druckvorganges aufgetragen ist, wobei eine Emulsion oder Dispersion aus elektrisch leitenden Partikeln und einem Träger- oder Bindermaterial tröpfchenweise auf die dielektrische Schicht aufgetragen ist, um das elektrisches Widerstandselement zu bilden, und dass die elektrisch leitenden Partikel aus einem metallischen Pulver bestehen, und dass die in Form des Widerstandselementes aufgebrachte Emulsion oder Dispersion nach dem Auftrag getrocknet und gesintert ist, so dass die elektrisch leitenden Partikel zu einem durchgehenden elektrischen Widerstandselement miteinander verbunden und/oder verschmolzen sind.

2. Elektrisches Heizelement nach Anspruch 1,
**dadurch gekennzeichnet, dass** die durch den Auftrag der Emulsion oder Dispersion erzeugte Schicht, insbesondere die daraus gebildete Schicht von elektrisch leitenden Partikeln, eine für eine elektrische Widerstandsheizung ausreichende Schichtdicke aufweist.

3. Elektrisches Heizelement nach Anspruch 1 oder 2,
**dadurch gekennzeichnet, dass** die elektrisch leitenden Partikel aus Kupfer oder einer Kupferlegierung bestehen.

4. Elektrisches Heizelement nach einem der Ansprüche 1 bis 3,
**dadurch gekennzeichnet, dass** die Dispersion oder Emulsion mittels einer Vorrichtung aufgebracht ist, die einen Druckkopf nach Art eines Tintenstrahldruckers aufweist und mittels derer die Dispersion oder Emulsion tröpfchenweise aufgebracht ist.

5. Elektrisches Heizelement nach einem der Ansprüche 1 bis 4,
**dadurch gekennzeichnet, dass** die dielektrische Schicht aus keramischem Material, insbesondere Aluminiumoxid besteht.

6. Elektrisches Heizelement nach einem der Ansprüche 1 bis 5,
**dadurch gekennzeichnet, dass** die Schutzschicht aus keramischem Material, insbesondere Aluminiumoxid, besteht.

7. Elektrisches Heizelement nach einem der Ansprüche 1 bis 6,
**dadurch gekennzeichnet, dass** die gesamte Oberfläche des Heizelementes oder des Heizelementträgers mit einer dielektrischen Schicht aus keramischem Material beschichtet ist, zum Beispiel im Wege einer Tauchbeschichtung oder im Wege eines Flammspritzverfahrens.

8. Elektrisches Heizelement nach einem der Ansprüche 1 bis 7,
**dadurch gekennzeichnet, dass** die Schutzschicht durch Dip-Coating und nachfolgendes Tempern aufgebracht und fixiert ist.

9. Elektrisches Heizelement nach einem der Ansprüche 1 bis 8,
**dadurch gekennzeichnet, dass** das Heizelement oder der Heizelementträger aus Metall besteht.

10. Elektrisches Heizelement nach einem der Ansprüche 1 bis 9,
**dadurch gekennzeichnet, dass** das Heizelement oder der Heizelementträger ein rohrförmiger Heizkörper, eine zylindrische Heizpatrone oder -hülse ist.

11. Elektrisches Heizelement nach einem der Ansprüche 1 bis 10,
**dadurch gekennzeichnet, dass** die Emulsion oder Dispersion durch einen funktionalen Druckvorgang nach Art eines Drop on Demand Verfahrens aufgebracht ist.

## Claims

1. An electrical heating element for technical purposes, particularly for heating hot runner systems, hot runner distributors, hot runner nozzles, molds of injection molding machines, wherein a dielectric layer, onto which an electric resistance element comprising electrical connection contacts for the contact with an electric power source, is applied onto a surface of the heating element or of a heating element carrier, wherein the resistance element is covered by a protective layer, particularly a dielectric layer, **characterized in that** the resistance element is applied by way of a functional printing process, wherein an emulsion or dispersion containing electrically conductive particles and a carrier or binding material is applied in drops onto the dielectric layer so as to form the electric resistance element, and that the electrically conductive particles consist of a metallic powder, and that the emulsion or dispersion applied in the form of the resistance element is dried and sintered after application, so that the electrically conductive particles are connected and/or fused to each other, so as to form a continuous electric resistance element.

2. The electrical heating element according to claim 1, **characterized in that** the layer produced by the application of the emulsion or dispersion, in particular the layer of electrically conductive particles formed thereby, has a layer thickness being sufficient for electric resistance heating.

3. The electrical heating element according to claim 1 or 2, **characterized in that** the electrically conductive particles consist of copper or a copper alloy.

4. The electrical heating element according to one of claims 1 to 3, **characterized in that** the dispersion or emulsion is applied by means of a device, which comprises a printing head as in an inkjet printer and by means of which the dispersion or emulsion is applied in drops.

5. The electrical heating element according to one of claims 1 to 4, **characterized in that** the dielectric layer consists of a ceramic material, in particular aluminum oxide.

6. The electrical heating element according to one of claims 1 to 5, **characterized in that** the protective layer consists of a ceramic material, in particular aluminum oxide.

7. The electrical heating element according to one of claims 1 to 6, **characterized in that** the complete surface of the heating element or of the heating element carrier is coated with a dielectric layer of ceramic material, for instance by way of a dip coating or by way of a flame spraying process.

8. The electrical heating element according to one of claims 1 to 7, **characterized in that** the protective layer is applied and fixed by dip coating and subsequent tempering.

9. The electrical heating element according to one of claims 1 to 8, **characterized in that** the heating element or the heating element carrier consists of metal.

10. The electrical heating element according to one of claims 1 to 9, **characterized in that** the heating element or the heating element carrier is a tubular heating body, a cylindrical heating cartridge or sleeve.

11. The electrical heating element according to one of claims 1 to 10, **characterized in that** the emulsion or dispersion is applied by a functional printing process of a drop-on-demand process type.

## Revendications

1. Élément chauffant électrique à des fins techniques, en particulier pour chauffer des systèmes de canaux chauffants, des répartiteurs de canaux chauffants, des buses de canaux chauds, des outils de machines de moulage par injection, une couche diélectrique étant appliquée sur une surface de l'élément chauffant ou d'un support d'élément chauffant, sur laquelle un élément de résistance chauffant est appliqué qui comporte des contacts de raccordement électriques pour établir le contact avec une source de courant électrique, l'élément de résistance étant recouvert d'une couche de protection, en particulier une couche diélectrique, **caractérisé en ce que** l'élément de résistance est appliqué au moyen d'un processus de pression fonctionnel, une émulsion ou dispersion de particules électriquement conductrices et d'un matériau porteur ou liant étant appliquée goutte à goutte sur la couche diélectrique pour former l'élément de résistance électrique, et que les particules électriquement conductrices consistent en une poudre métallique, et que l'émulsion ou dispersion appliquée sous la forme de l'élément de résistance est séchée et frittée après l'application, de sorte que les particules électriquement conductrices soient liées ou fondues les unes avec les autres à un élément de résistance électrique continu.

2. Élément chauffant électrique selon la revendication 1, **caractérisé en ce que** la couche formée par l'application de l'émulsion ou dispersion, en particulier la couche de particules électriquement conductrices formée à partir de celle-ci, a une épaisseur de couche suffisante pour un chauffage de résistance électrique.

3. Élément chauffant électrique selon la revendication 1 ou 2, **caractérisé en ce que** les particules électriquement conductrices sont en cuivre ou un alliage de cuivre.

4. Élément chauffant électrique selon une des revendications 1 à 3, **caractérisé en ce que** la dispersion ou émulsion est appliquée au moyen d'un dispositif, qui comprend une tête d'impression du type utilisé dans une imprimante à jet d'encre et au moyen duquel la dispersion ou émulsion est appliquée goutte à goutte.

5. Élément chauffant électrique selon une des revendications 1 à 4, **caractérisé en ce que** la couche diélectrique est formée en un matériau céramique, en particulier en oxyde d'aluminium.

6. Élément chauffant électrique selon une des revendications 1 à 5, **caractérisé en ce que** la couche de protection est formée en un matériau céramique, en particulier en oxyde d'aluminium.

7. Élément chauffant électrique selon une des revendications 1 à 6, **caractérisé en ce que** la surface complète de l'élément chauffant ou du support d'élément chauffant est recouverte d'une couche diélectrique en un matériau céramique, par exemple par trempage ou par pistolage à la flamme.

8. Élément chauffant électrique selon une des revendications 1 à 7, **caractérisé en ce que** la couche de protection est appliquée et fixée par revêtement cireux et trempage subséquent.

9. Élément chauffant électrique selon une des revendications 1 à 8, **caractérisé en ce que** l'élément chauffant ou le support d'élément chauffant est formé en métal.

10. Élément chauffant électrique selon une des revendications 1 à 9, **caractérisé en ce que** l'élément chauffant ou le support d'élément chauffant est un dispositif de chauffage tubulaire, une cartouche ou douille de chauffage cylindrique.

11. Élément chauffant électrique selon une des revendications 1 à 10, **caractérisé en ce que** l'émulsion ou dispersion est appliquée au moyen d'un processus de pression fonctionnel du type du procédé de goutte à la demande.
